(19) Europäisches Patentamt
European Patent Office
Office européen des brevets

(11) Publication number: **0 100 233 A1**

(12) # EUROPEAN PATENT APPLICATION

(21) Application number: 83304303.7

(51) Int. Cl.³: F 16 D 69/02

(22) Date of filing: 25.07.83

(30) Priority: 26.07.82 US 401452

(43) Date of publication of application: 08.02.84 Bulletin 84/6

(84) Designated Contracting States: AT BE CH DE FR GB IT LI NL SE

(71) Applicant: THIOKOL CORPORATION, 110 N. Wacker Drive, Chicago Illinois 60606 (US)

(72) Inventor: Gallagher, John P., 175 Harbor Inn Road, Bayville New Jersey 08721 (US)
Inventor: Dougherty, Philip P., 824 Fernwood Avenue, Penndel Pennsylvania 19047 (US)

(74) Representative: Warren, Anthony Robert et al, BARON & WARREN 18 South End Kensington, London W8 5BU (GB)

(54) **Method of and apparatus for making disc brake pads and like products.**

(57) A method of and apparatus for making disc brake pads and like products comprises producing a continuous flow of a ribbon-like blended but uncured hydrocarbon cold forming friction formulation (24), pressing or stamping out (at 34) form-retaining shaped disc brake pads or preforms (36) from the ribbon-like formulation, and curing the preforms in an oven (42) at an appropriate temperature for several hours..Featured is the recovery of uncut trimmings and reincorporation in the uncured hydrocarbon cold forming friction formulation for recycling, the fabrication of composite brake pads or preforms in which metal components useful for installation purposes are incorporated in the preforms while still uncured, and the production of disc brake pads or other preforms in a continuous manner by automatic machinery.

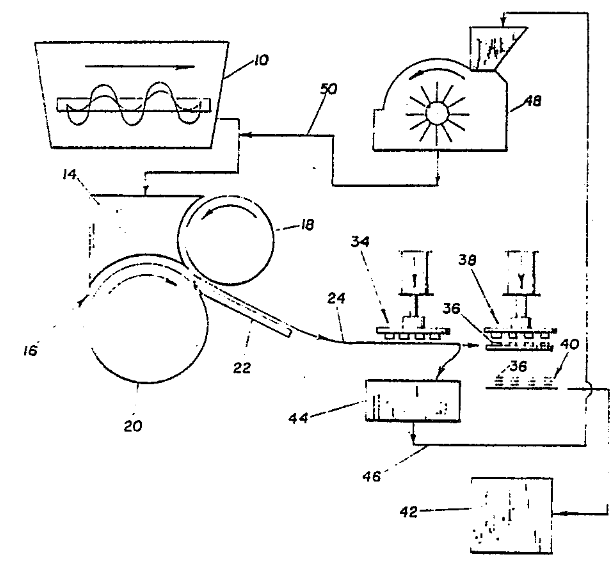


EP 0 100 233 A1

# METHOD OF AND APPARATUS FOR MAKING DISC BRAKE PADS AND LIKE PRODUCTS

## BACKGROUND OF THE INVENTION

### 1. Field of the Invention

The present invention relates to an improved method of and apparatus for making friction elements such as disc brake pads and like products for motor vehicle and other automotive industry applications, and more particularly, to such products that are made from hydrocarbon cold forming materials.

### 2. Description of the Prior Art

Materials commonly employed in the prior art in the manufacture of friction elements such as disc brake pads comprise a mixture of inorganic fibers and particulate material that is largely inorganic bonded together by an organic binder. In the manufacture of friction elements, a typical practice is to thoroughly blend the mixture, place the mixture in molds, and then subject the molded component to pressure. The molding step requires heat in addition to pressure when the binder is a material such as a phenolic resin.

In the prior art friction elements have been manufactured from hydrocarbon cold forming materials by cold molding, that is, molding by the application of pressure without heat. Hydrocarbon cold forming friction materials, in their initial form of a raw mixture or blend, have a dry putty-like consistency. Typically, such materials include at least two systems. The first system includes inorganic fibers, which may include asbestos, cellulose fibers, optionally carbon and/or graphite particles and a liquid thermosetting organic binder comprising a hydroxyl terminated butadiene copolymer having the empirical formula

$$HO—[—(CH_2-CH=CH-CH_2)_a—(\underset{\displaystyle X}{\overset{|}{CH}}-CH_2)_b—]_n—OH$$

wherein X is phenyl or CN, a has a value of from 0.5 to 0.95, b has a value of from 0.05 to 0.5, and n is an integer from about 10 to 140; the binder having been cured with from about 0.1 to about 5 percent of a peroxide catalyst.

A second hydrocarbon cold forming system includes metallic materials and graphite particles bonded together with a liquid thermosetting hydroxyl terminated butadiene copolymer having the empirical formuala:

$$HO—[—(CH_2-CH=CH-CH_2)_a—(\underset{\displaystyle X}{\overset{|}{CH}}-CH_2)_b—]_n—OH$$

wherein X is phenyl or CN, a has a value of from 0.5 to 0.95, b has a value of from 0.05 to 0.5, and n is an integer from about 10 to 140; the copolymer having been cured with from about 0.02 to about 12.5 percent of a peroxide catalyst.

The components mentioned above for both hydrocarbon cold forming systems are discussed in greater detail in United States Patent No. 4,125,496 granted on November 14, 1978, which patent is hereby incorporated by reference for the purpose of such additional description.

The abovementioned systems typically may contain the following amounts of the above constituents:

| First System Ingredients | Wt. % |
|---|---|
| Inorganic Fibers | 20-70 |
| Cellulose Fibers | 5-25 |
| Coke Particles | 0-15 |
| Graphite Particles | 0-10 |
| Carbon Black | 0-15 |
| Thermosetting Organic Binder | 10-60 |

| Second System Ingredients | Wt/ % |
|---|---|
| Metallic Material (1) | 15-75 |
| Graphite Particles | 5-5 |
| Thermosetting Organic Binder | 2-50 |

(1) Metal fibers, metal powder or admixtures

In the manufacture of friction elements, hydrocarbon cold forming formulations are typically uniformly mixed or blended, and then cold molded at pressures on the order of 2000 to 5500 psi to form a preform.

Curing of the preform can be accomplished by heating at elevated temperatures on the order of about 350° to about 600°F. for a period of several hours.

Certain advantages are known to be derived from dispensing with heat in the molding of friction elements. These advantages include an increase in production rate because of the elimination

of the dwell time inherent in hot molding operations, and the avoidance of the need for solvent recovery when, for example, an organic binder of the phenolic type dissolved in an organic solvent is used. The requirement for heat in the molding of friction elements is particularly disadvantageous due to the substantial waste of friction materials that results from the overflow which is unavoidable in the filling of the molds, and due also, to the need for removing such overflow from the cured friction element by tumbling or by other means. Additionally, dusty dry mixes of phenolic resin binders present a hazard to health that is avoided by hydrocarbon cold forming formulations because of their putty-like consistency.

There still exists a need and a demand in the art, however, for further improvements in the fabrication of friction elements, particularly in the method of and apparatus for manufacturing such elements to the end of effecting a further and significant improvement in productivity and for maximizing yield.

SUMMARY OF THE INVENTION

An object of the invention is to provide an improved method of and apparatus for manufacturing friction elements thereby significantly to improve productivity and yield.

Another object of the invention is to provide a method of and apparatus for fabricating friction elements from hydrocarbon cold forming formulations which avoids the need for molds in the manufacturing operation and thereby eliminates the dwell time inherent in molding operations.

A further object of the invention is to provide such a non-molding method of and apparatus for fabricating friction elements which eliminates a large amount of manual labor, labor that is required in molding operations because of the need to have detachable dies for facilitating extraction of the molded part after molding and before heat curing.

BAD ORIGINAL

A further specific object of the invention is to provide an improved method of and apparatus for fabricating friction materials that permits densification of the friction element preforms, which densification decreases surface porosity and results in increased yield due to dimensional tolerance, a larger percentage of completed friction elements being within the required tolerance.

A specific object of the invention is to provide such an improved method of and apparatus for fabricating friction elements which makes possible enhancement in yield by enabling recovery and recycling of material trimmed from friction element preforms or parts.

A further specific object of the invention is to provide such an improved method of and apparatus for fabricating composite friction elements, that is, friction elements in which metal components, such as steel inserts, are incorporated while the friction elements are, as yet, uncured.

Still another specific object of the invention is to provide such an improved method of and apparatus for fabricating friction elements that enables the production of friction elements in a continuous manner by automatic machinery.

In accomplishing these and other objectives of the present invention, there is provided a method of and apparatus for manufacturing disc brake pads or like products comprising:

(1) blending a hydrocarbon cold forming friction material;

(2) forming the blended hydrocarbon cold forming friction material under pressure into an uncured ribbon of uniform thickness and width;

(3) stamping or pressing out with a blanking die form-retaining shaped friction element preforms or pieces from the ribbon;

(4) optionally subjecting the friction element preforms to pressure in a disc segment densification press to decrease the surface porosity thereof; and

(5) oven curing the friction element preforms so formed.

Thus, in an apparatus embodiment of the present invention for making friction elements such as disc brake pads and like products from blended hydrocarbon cold forming friction materials, there is provided a first means for producing a continuous flow of the hydrocarbon cold forming materials in the form of a ribbon or a succession of strip segments, a second means to press, stamp or blank out at least one and desirably a plurality of shaped friction element preforms from said ribbon or segments and third means for applying heat for a period of several hours to the shaped friction element preforms, which preforms may be in a free standing state, at an appropriate elevated temperature of about 350° to about 600°F.

In accordance with a first embodiment of the invention, the above-mentioned first means for producing a continuous flow of the hydrocarbon cold forming friction materials includes an automatic screw supply means, a surge hopper, a rolling milling including at least two opposed rolls and a cooperating compressor and stripper knife for producing strips or segments of the friction material, and means to stack and count the segments.

The above-mentioned second means for pressing or stamping out shaped friction element preforms includes a multiple disc segment die-cut press. In the illustrated embodiment, the disc segment die-cut press is operative to produce from each segment four form-retaining disc brake pads or other friction element preforms or pieces in one pressing or stamping operation. The uncut thermosettable residue or trimming from each segment is recovered and returned to the mixing mill by a salvage pulverizer for recycling. Such residue, which is uncured, is reincorporated in the hydrocarbon cold forming friction materials in the surge hopper in substantially unaltered condition whereby the homogeneity of the hydrocarbon cold forming friction materials is continuously maintained.

From the disc segment die-cut press, the disc brake pads or other friction element preforms, as yet, uncured, optionally are introduced to a multiple die segment densification press which is operable to decrease the surface porosity of the friction element preforms or pieces. The preformed pieces are then stacked, preferably by an automatic stacker.

The above-mentioned third means for applying heat to the shaped friction element preforms may comprise an oven of the batch or continuous type. In either case the preforms are heated at an elevated temperature for several hours until cured.

In a second embodiment of the invention, instead of pressing or stamping out a stack of shorter strips or segments from the mixture in ribbon form, the ribbon is fed in a continuous manner to the die-cut press thereby providing a continuous automatic pressing or stamping out of disc brake pads or other friction element preforms or pieces, the preforms being stacked and the uncut residue or trimming being returned during the process to the mixing mill for recycling. Optionally, the stacks of shaped friction element preforms or pieces are then introduced directly into an oven for curing, or conveyed first to a disc segment densification press prior to being placed in the oven for curing.

In a third embodiment of the invention, the stacking of the friction element preforms or pieces is dispensed with and the preforms are introduced directly into the oven for curing. The oven, in this embodiment of the invention, desirably, is of the continuous type.

BRIEF DESCRIPTION OF THE ACCOMPANYING DRAWINGS

Having summarized the invention, a detailed description follows with reference being had to the accompanying drawings, in which like reference numerals refer to the same parts, and which form part of the specification, of which:

Fig. 1 is a diagrammatic side elevation of apparatus for manufacturing disc brake pads or like friction elements according to a first embodiment of the invention;

Fig. 2 is a diagrammatic side elevation of apparatus for continuous, automatic manufacture of friction elements according to a second embodiment of the invention; and

Fig. 3 is a diagrammatic side elevation of apparatus illustrating a modification of the apparatus embodiment of Fig. 2.

DESCRIPTION OF THE PREFERRED EMBODIMENTS

Referring to Fig. 1, there is illustrated an apparatus embodiment of the present invention comprising a mixing mill or automatic screw supply station 10 for thoroughly mixing or blending the various raw materials that are used to make up the hydrocarbon cold forming material or formulation. The mixing mill 10 includes an automatic screw indicated at 12 for feeding the blended material to a surge hopper station 14. From the surge hopper station 14 the blended material is pulled through a two-roll canted rolling mill 16 having an upper roll 18 and a lower roll 20. The rolls 18 and 20 are rotated in opposite directions and cooperate with a compression and stripper knife 22 to provide a continuous material flow in the form of a ribbon or strip 24 of substantially uniform thickness and width. While not shown in the drawing, it will be understood that suitable means may be provided in cooperation with the compression and stripper knife 22 for adjustment of the thickness and width of the ribbon 24.

The ribbon 24 is moved in the direction of the arrow through a flying knife segment cutter station 26 wherein the ribbon 24 is cut in strips or segments 28 of substantially uniform length and moved on by an endless conveyor belt means (not shown) to an automatic stacker and counter station indicated at 30. It is contemplated that an automatic conveyor belt means

(not shown) may be employed to guide the continuous material flow from the rolling mill 16 and compression and stretch knife 22 to the flying knife segment cutter station 26.

From the automatic stacker and counter station 30, the stacks of segments 28 are conveyed by an automatic feed means indicated at 32 including an endless conveyor belt (not shown) to a multiple blanking die or disc segment die-cut press station indicated at 34 which produces a plurality of form-retaining brake disc pads or other friction element preforms or pieces 36 with each stamping or pressing operation. In Fig. 1 four such preforms or pieces 36 are shown as being produced with each stamping or pressing operation of press 34. It will be understood, however, that press 34 may be selected to produce a greater or smaller number of pieces 36 with each stamping or pressing operation. Advantageously, the dies associated with station 34 are adjustable or replaceable to facilitate the making of dimensional changes in the preforms 36 that may be desired.

The preforms or pieces 36 are shown in Fig. 1 as being conveyed to a multiple disc segment densification press station 38 for decreasing the surface porosity of the pieces 36, the pieces 36 when operated upon being stacked at an automatic stacker station indicated at 40. From the automatic stacker station 40, the stacks of pieces 36 are conveyed into an oven 42 for curing. The use of the densification press station 38 is optional, and the pieces 36 may, if desired, be conveyed directly from the disc segment die-cut press 34 to the automatic stacker station 40.

The trimmings or off cuts of the segments 28 are recovered at the disc segment die-cut press station 34 by salvage means, indicated at 44, which conveys them via a conduit 46 to a salvage pulverizer 48 from which they are further conveyed by a conduit

50 back to the surge hopper station 14 in which the trimmings are added to the blended materials arriving from the automatic screw supply means 10.

Curing of the stacks of preforms or pieces 36 can be accomplished in a free standing state in oven 42 by heating at temperatures on the order of 350° to about 600°F. for a period of several hours.

A feature of the present invention is the ease with which composite friction elements may be formed, specifically friction elements in which metal components such as steel inserts may be incorporated for facilitating installation of the friction elements in a vehicle or other automotive industry application. Thus, it is contemplated that a station (not shown) may be provided between the disc segment die-cut press station 34 and the disc segment densification press 38 for automatically pressing such a steel insert in appropriate position and manner in the surface of each preform or piece 36. Alternatively, the metal component insert may be incorporated in the friction element preforms in the disc segment densification station 38. Preferably, the inserts are so formed, in known manner, that when the piece 36 is cured and hardened, the insert is firmly and securely attached to the piece.

In Fig. 2 there is illustrated another embodiment of the invention wherein the flying knife segment cutter station 26, the automated counter and stacker station 30, and the automatic feed station 32 of the Fig. 1 arrangement have been dispensed with, the feeding of the ribbon 24 to the disc segment die-cut press station 34 being in a continuous manner for continuous, automatic manufacture of brake disc pads or other friction element preforms or pieces.

Specifically, there is shown in Fig. 2 a mixing mill or automatic screw supply station 10, a surge hopper station 14, and a compression and stripper knife station 16, for providing a

continuous material flow in the form of a ribbon 24 of substantially uniform thickness and width. The ribbon 24 is passed directly through the disc segment die-cut press station 34 wherein four preforms or pieces 36 are produced with each pressing or punching operation of the press 34, the rate of feed of the ribbon being synchronized with the pressing or punching rate of press 34. The preforms 36 are passed in groups of four to the disc segment densification press 38. If desired, the press 38 may be omitted, and the preforms 36 may be passed directly to the automatic stacker station 40 from where the stacks of preforms 36 are conveyed to the oven 42.

As those skilled in the art will understand, the oven for curing the preforms may, if desired, be of a continuous type through which preforms in groups of four or more or less may pass in succession while being cured, entering oven 42 at one location and exiting at another. In such case the automatic stacker station 40 may be omitted, and the preforms 36 may be passed directly into the oven from the disc segment die-cut press station 34, as illustrated in Fig. 3, the oven in Fig. 3 being designated by the reference numeral 52.

In the several embodiments of the invention that are illustrated and described herein, details concerning the various conveyor belts and other means that are required to transport the raw materials making up the hydrocarbon cold formulation, the ribbon 24, and the short strips 28 to the various stations for producing preforms 36 and for introducing the preforms 36 into the oven 42 have not been described in detail in order to avoid undue complexity in the drawings and the specification, such details of conveying and transporting means per se being well known in the art and forming no part of the present invention.

Thus, in accordance with the invention there has been provided an improved method of and apparatus for manufacturing disc brake pads or like products which avoids the need for molds

in the manufacturing operation and eliminates the dwell time inherent in molding operations, which enables a significant increase in productivity because pressing or punching out preforms or pieces can be performed very rapidly, which permits densification of the preforms to decrease surface porosity and enables increased yield due to dimensional tolerance, which facilitates recycling or reclaiming of material trimmed from preforms or pieces which might otherwise be waste, and which facilitates the incorporation in the preforms or pieces of metal components or steel inserts desired in the preforms for installation purposes.

There has also been provided an improved method of and apparatus for the production of friction element preforms or pieces in a continuous manner by automatic machinery.

The friction material formulations useful in the practice of this invention are of the hydrocarbon cold forming type. Typically, hydrocarbon cold forming friction material formulations are prepared by blending or mixing fibers, particles and/or other desirable additives with a liquid thermosetting binder to a putty-like consistency. The thus produced, uncured hydrocarbon cold forming friction material formulations can be readily formed into form-retaining shapes.

The fibers, particles and other additives which may be employed in the hydrocarbon cold forming friction material formulations include inorganic, and in some instances, organic and metallic constituents, that have heretofore been used in friction materials. The inorganic fibers or fibrous filler may comprise from about 20 to 70% by weight of the total composition. The fibers may be asbestos fibers, glass fibers, rock wool, fibrous talc, and mixtures thereof. Organic fibers (wood) may be used in conjunction with the inorganic fibers. The friction material may also contain various particulate fillers that may be either inorganic or organic, as is known in the art, for

providing friction materials having certain desired properties such as wear resistance, reduced noise, high temperature protection, etc. Such non-fibrous fillers may comprise from 0 to 80% by weight of the total friction material composition.

As previously stated, the above enumerated materials are blended or mixed with a liquid thermosetting binder to produce an uncured formulation of putty-like consistency. Any liquid thermosetting binder may be employed which will produce a putty-like formulation in the uncured state, and which when cured, will produce of friction element having adequate physical and mechanical properties. Exemplary of such liquid thermosetting binders are homopolymers and copolymers of butadiene which have terminal functional groups such as hydroxy, carboxy or amino groups and the like. When butadiene copolymers are employed, the comonomer will generally be styrene or acrylonitrile. Such homopolymers and copolymers of butadiene having terminal functional groups may be described by the general formula:

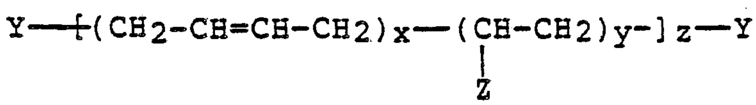

where Z is hydrogen, phenyl, -CN, -COOH;

Y is $-CH=CH_2$, -OH, -COOH, -CN, 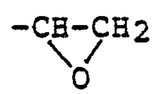, an aromatic epoxide, a cycloaliphatic epoxide, halogen,

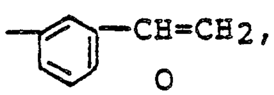,

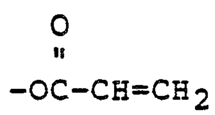, 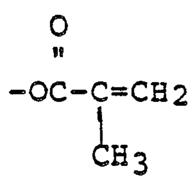, $-CH_2NH_2$, 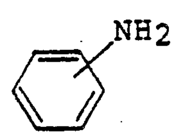, 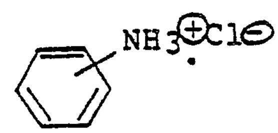

and -SH;

x has a value of about 0.2 to 1.0;

y has a value of 0 to about 0.98; and

z is an integer from 1 to about 200.

Useful liquid thermosetting binders also include butadiene homopolymers and copolymers, generally with styrene or acrylonitrile, which do not contain terminal functional groups; phenolic resins; polyamides; and polychloroprenes.

Typically, the liquid thermosetting binders are heat-curable in the presence of a catalyst, particularly organic peroxides such as dicumyl peroxide, t-butyl peroxide, cumene hydroperoxide, diisopropyl benzene hydroperoxide, t-butyl hydroperoxide, benzoyl peroxide, lauroyl peroxide and the like, dicumyl peroxide being preferred. The amount of peroxide needed to cure the liquid thermosetting binder may vary depending upon the particular binder and the curing conditions. Generally, all that is required is that the catalyst be employed in an amount sufficient to cause desired amount of cure of the binder, such amount typically being on the order of from about 0.02% to about 12.5% by weight based on the weight of the liquid thermosetting binder.

A preferred liquid thermosetting binder is a hydroxyl terminated butadiene copolymer having the empirical formula

$$HO-[-(CH_2-CH=CH-CH_2)_a-(\underset{X}{\underset{|}{C}}H-CH_2)_b-]_n-OH$$

wherein X is phenyl or CN, a has a value of from 0.5 to 0.95, b has a value of from 0.05 to 0.5, and n is an integer from about 10 to 140.

The hydrocarbon cold forming friction material formulations useful in the practice of this invention may be prepared by techniques known in the art. Any method of mixing or blending the various fibers, particles and/or additives with the liquid thermosetting binder which results in a homogeneous, putty-like formulation may be employed. Typical mixing or blending methods include high shear type mixing and sigma blade mixing.

# CLAIMS

1. A method of making friction elements such as disc brake pads and like products from blended hydrocarbon cold forming friction materials comprising the steps of:

producing a ribbon (24) of material from said blended hydrocarbon cold forming materials,

pressing out by the operation of a blanking die (34) at least one shaped friction element preform (36) from said ribbon of material, and

curing said friction element preform by the application of heat (at 42).

2. A method as specified in claim 1 wherein said hydrocarbon cold forming friction materials comprise a liquid thermosetting resin binder that is thoroughly blended with various fibers and particles that, conventionally, are added to friction materials.

3. A method as specified in claim 2 wherein said hydrocarbon cold forming materials include inorganic fibers, cellulose fibers, optionally carbon and/or graphite particles, and a liquid thermosetting organic binder comprising a homopolymer or copolymer of butadiene which has terminal functional groups.

4. A method as specified in claim 3 wherein said liquid thermosetting organic binder is a hydroxyl terminated butadiene copolymer.

5. A method as specified in claim 4 wherein said hydroxyl terminated butadiene copolymer has the empirical formula

$$HO-[-(CH_2-CH=CH-CH_2)_a-(\underset{\displaystyle X}{\underset{|}{CH}}-CH_2)_b-]_n-OH$$

where X is phenyl or CN, a has a value of from 0.5 to 0.95, b has a value of from 0.05 to 0.5, and n is an integer from about 10 to 140; the binder having been cured with from about 0.1 to about 5 percent of peroxide catalyst.

6. A method as specified in claim 2 wherein said hydrocarbon cold forming materials include metallic materials and graphite particles bonded together with a liquid thermosetting hydroxyl terminated butadiene copolymer.

7. A method as specified in claim 6 wherein said hydroxyl terminated butadiene copolymer has the empirical formula

$$HO—[—(CH_2-CH=CH-CH_2)_a—(\underset{X}{CH}-CH_2)_b—]_n—OH$$

wherein X is phenyl or CN, a has a value of from 0.5 to 0.95, b has a value of from 0.05 to 0.5, and n is an integer from about 10 to 140; the copolymer having been cured with from about 0.02 to about 12.5 percent of a peroxide catalyst.

8. A method as specified in any preceding claim, wherein said blended hydrocarbon cold forming materials are squeezed in a rolling mill (16) to compact the materials into a ribbon (24) of substantially uniform thickness and width.

9. A method as specified in any preceding claim, further including the step of subjecting said shaped friction element preform (36), while as yet uncured, to pressure (at 38) to decrease the surface porosity thereof.

10. A method as specified in any preceding claim, wherein a plurality of shaped friction element preforms (36) are simultaneously pressed out with each operation of said blanking die (34), and wherein said plurality of preforms are cured simultaneously by the application of heat (at 42) at a temperature of about 350° to 600°F. for a period of several hours.

11. A method as specified in any preceding claim, further including the steps of

cutting said ribbon of material (24) into a plurality of segments,

stacking said segments (at 30),

successively pressing out by the operation of a blanking die (34) a plurality of shaped friction element preforms (36) from each of said segments,

disposing said shaped friction element preforms in stacks (40), and

curing said stacks of shaped friction element preforms by the application of heat (at 42).

12. A method as specified in claim 11, further including the step of

reincorporating residue of said segments (28) in said blended hydrocarbon cold forming friction materials.

13. A method as specified in claim 11 or claim 12, further including the step of

incorporating a metal component insert with at least some of said shaped friction element preformed prior to curing thereof.

14. Apparatus for making friction elements such as disc brake pads and like products from blended hydrocarbon cold forming friction materials comprising,

first means (16) for producing a continuous flow of said materials in the form of a ribbon (24),

second means (34) to press out at least one shaped friction element preform (36) from said ribbon, and

third means (42) to apply heat to said friction element preform for the curing thereof.

15. Apparatus as specified in claim 14, wherein said hydrocarbon cold forming friction materials comprise a liquid thermosetting binder that is thoroughly blended with various fibers and particles that, conventionally, are added to friction materials.

16. Apparatus as specified in claim 14 or 15, further including a mixing mill (10) in which said blended hydrocarbon cold forming materials are formed by the blending of inorganic fibers, optionally carbon and/or graphite particles, and a liquid thermosetting inorganic binder comprising a hydroxyl terminated butadiene copolymer.

17. Apparatus as specified in claim 16, wherein said mixing mill includes automatic screw supply means, and wherein said first means includes surge hopper means, a rolling mill and a compression and stripper knife, said automatic screw supply means feeding said blended hydrocarbon cold forming materials to said surge hopper means.

18. Apparatus as specified in any of claims 14 to 17, wherein said first means further includes a knife segment cutter (26) for cutting said ribbon of material in segments (28) and means (30) for stacking said segments, and said second means includes a disc segment die-cut press (34) that is operative to press out said at least one shaped friction element preform from each of said stacked segments.

19. Apparatus as specified in claim 18, wherein said disc segment die-cut press includes a plurality of blanking dies for pressing out a plurality of shaped friction element preforms in each pressing operation.

20. Apparatus as specified in any of claims 14 to 19, wherein said third means comprises an oven, and further including means for conveying said stacked shaped friction element preforms into said oven.

21. Apparatus as specified in any of claims 17 to 20, further including means (44) for recovering trimmings from said segments (28) and reincorporating said trimmings in said blended hydrocarbon cold forming materials in said surge hopper (14).

0100233

1/3

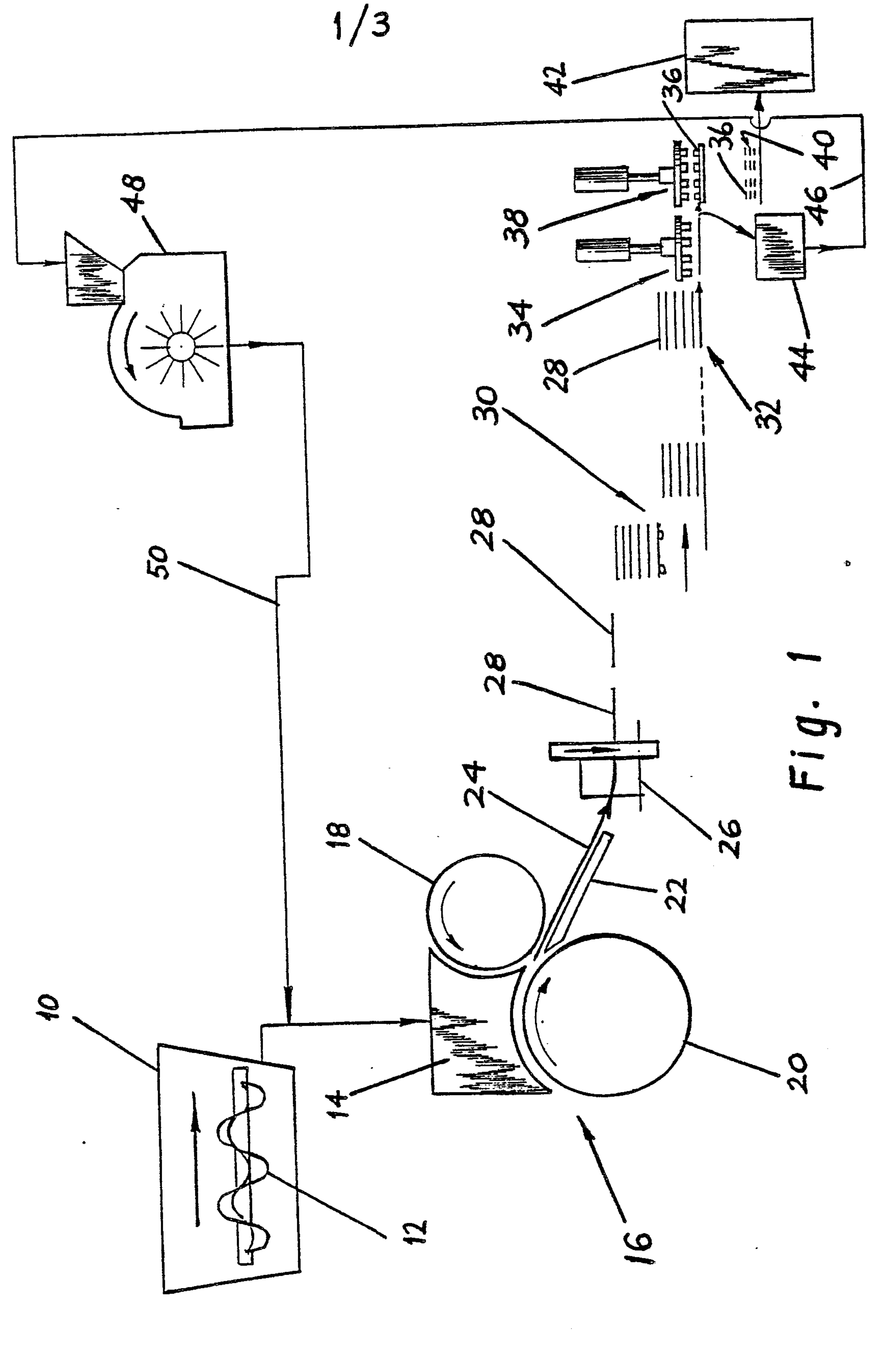


Fig. 1

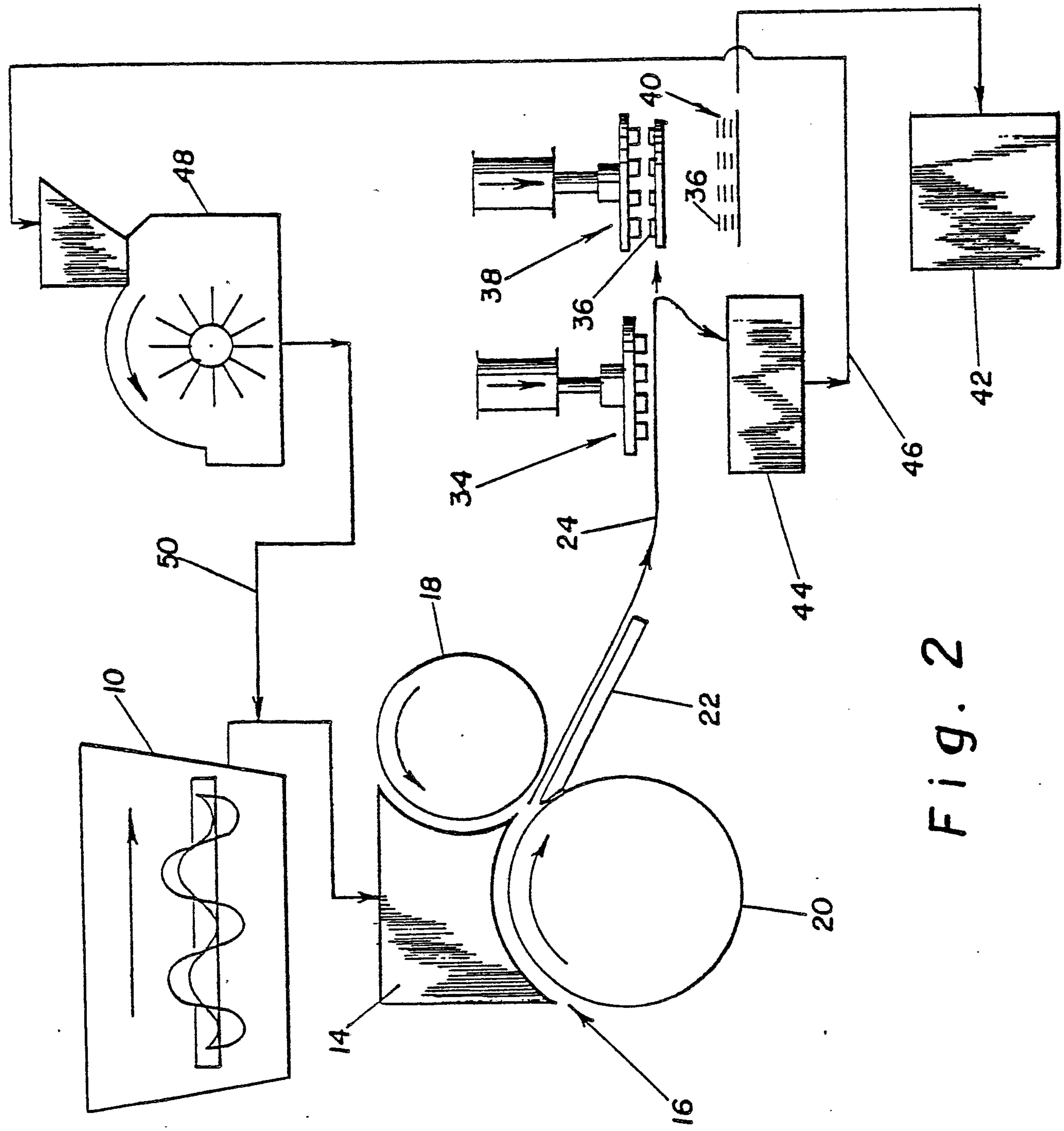


Fig. 2

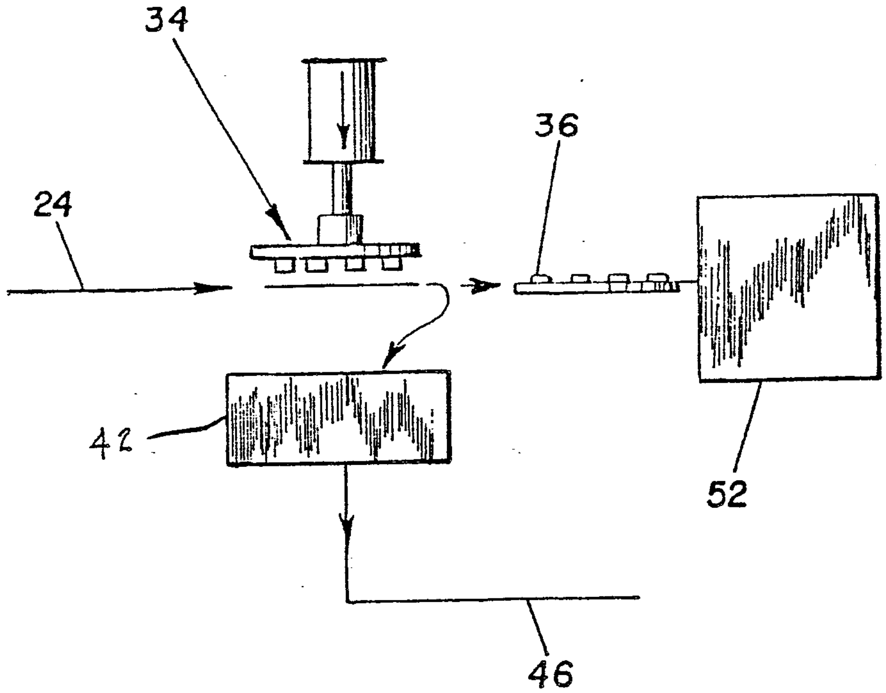


Fig. 3

0100233

European Patent Office

# EUROPEAN SEARCH REPORT

Application number

EP 83 30 4303

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,X | US-A-4 125 496 (S.B. McGINNIS)<br><br>* Column 2, lines 4-69; column 3, lines 1-8; column 4, lines 9-13, 19-35, table II, 59-68; column 5, lines 1-41; example 1; claims 1-8 * | 1-5,7, 9,14-16 | F 16 D 69/02 |
| X | US-A-2 811 750 (H.J. COFEK)<br><br>* Column 2, lines 55-72; figures 1-5; column 3, lines 19-35, 55-75; column 4, lines 1-17, 23-25 * | 1,2,8, 11,13, 16,17 | |
| | | | TECHNICAL FIELDS SEARCHED (Int. Cl. 3) |
| | | | F 16 D |

The present search report has been drawn up for all claims

| Place of search | Date of completion of the search | Examiner |
|---|---|---|
| THE HAGUE | 02-11-1983 | BOULON A.F.J. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82